# EUROPEAN PATENT SPECIFICATION

(11) **EP 0 669 457 B1**
(45) Date of publication and mention of the grant of the patent: **02.09.1998**
(21) Application number: 95105008.7
(22) Date of filing: 23.03.1993
(51) Int. Cl.: F02D 41/40, F02D 41/20

(54) **Fuel-injection device**
Kraftstoff-Einspritzvorrichtung
Dispositif d'injection de carburant

(30) Priority: 26.03.1992 JP 100686/92; 26.03.1992 JP 100687/92; 26.03.1992 JP 100688/92; 26.03.1992 JP 100689/92
(43) Date of publication of application: 30.08.1995
(62) Divisional of application: 93104793.0
(73) Proprietor: ZEXEL CORPORATION, Toshima-ku, Tokyo (JP)
(72) Inventor: Ohishi, Takashi, Higashimatsuyama, Saitama (JP); Fujita, Mitsuhiro, Higashimatsuyama, Saitama (JP); Yajima, Satoshi, Higashimatsuyama, Saitama (JP); Shimagawa, Masahiko, Higashimatsuyama, Saitama (JP)
(74) Representative: Patentanwälte Gesthuysen, von Rohr, Weidener, Häckel

(56) References cited:
- EP-A- 0 563 760
- WO-A-89/11034
- US-A- 4 982 331

## Description

The present invention pertains to a fuel-injection device according to the preamble of claim 1.

Among this type of fuel-injection devices, for example, one of the well-known ones is introduced in JP - A - 63-21346. In this device, since the injection level is determined by the time length while a valve is actually closed (actual valve closed-time length), the time point when the valve of a solenoid valve seats on the seat is detected, and the actual valve closed-time length after the valve's seating is counted.

Therefore, on this fuel-injection device, a closed-valve detection unit is provided that detects the time point when the solenoid valve closes in response to the charging of a driving pulse, and this actual valve's closing detection unit has a voltage-detecting circuit to obtain voltage signals corresponding to the waveform of the flowing current, in response to the driving pulse, in the solenoid valve's excited coil, and a differentiating circuit to differentiate the output voltage from the voltage-detecting circuit.

In the aforementioned reference, if an electrical source voltage (battery voltage) becomes lower than a rated voltage level, it takes longer time for the solenoid valve to be seated, which delays the start of the injection, and since a broader driving pulse width is required to maintain a specific injection level, the responsiveness for fuel-injection becomes poor.

US - A - 4,982,331 discloses a fuel-injection system for an engine. A fuel-injector injects fuel into an intake manifold of the engine. A turbine-type pump is housed inside a fuel tank and supplies the fuel-injector with fuel. A controller is provided which calculates a basic pulse width of pulses that are applied to the fuel injector. When the voltage of a battery, which powers the fuel-pump, and the fuel temperature fall below levels which cause the discharge pressure of the fuel pump to drop below a prescribed pressure, the controller corrects the basic pulse width by lengthening it to compensate for the drop in fuel pressure.

Object of the present invention is to offer a fuel-injection device which can secure the solenoid valve's responsiveness.

The above object is achieved by a fuel-injection device with the features of claim 1. Preferred embodiments are subject of the subclaims.

Especially, a fuel-injection device of the present invention has a fuel-injection pump, and a solenoid valve installed between the high-pressure side and the low-pressure side, that lead to the compressor of the fuel-injection device, so as to adjust the communication conditions between the high-pressure chamber and the low-pressure chamber, and said fuel-injection pump's injection level of the fuel to be supplied to the combustion engine is adjusted by opening/closing the solenoid valve. And, this fuel-injection device comprises: a desired injection level computation means to compute the output time based on an accelerator pedal position (acceleration level) and the engine rotation number; a driving pulse forming means to form a driving pulse composed of a driving pulse having a large duty ratio in the forced time length, and of a driving pulse having a small duty ratio in the limited time length, within the solenoid valve's driving time length determined by the aforementioned time delay in solenoid valve's closing and by the aforementioned output time of the desired injection level; a solenoid valve driving means to drive the aforementioned solenoid valve by the driving pulse formed by this driving pulse forming means: a current waveform detecting means to detect the current waveform supplied to the aforementioned solenoid by this solenoid valve driving means; a seating detection means to detect the time point of the solenoid's seating from this current waveform; an electrical source voltage detecting means to detect the electrical source voltage used for the control of the aforementioned solenoid valve; a driving pulse correcting means to adjust the forced time length and the duty ratio of the driving pulse of the limited time length; a solenoid valve driving means to drive the solenoid valve by the driving pulse corrected by this drive pulse correcting means.

Accordingly, the driving pulse is composed, by the driving pulse forming means, of the driving pulse having a large duty ratio in the forced time length, and of the driving pulse having a small duty ratio in the limited time length, within the driving time length determined by the time delay in the solenoid valve's closing and by the output time computed by the desired injection level computation means, and based on the voltage value detected by the electrical source voltage detecting means, the forced time length is made longer and the duty ratio of the driving pulse of the forced time length is made larger if the voltage value is lower than the rated voltage value, while the forced time length is made shorter and the duty ratio of the driving pulse is made smaller if the voltage value is higher than the rated voltage value. Thus, by adjusting the forced time length and the duty ratio of the driving pulse of the limited time length, the aforementioned object can be achieved.

Further, the driving pulse is composed of the driving pulse with a large duty ratio in the forced time length, and of the driving pulse with a small duty ratio in the limited time length, and the solenoid valve is driven by this driving pulse; therefore, the solenoid valve's responsiveness is improved by the forced time length of large duty ratio, and, simultaneously the seating time point in the current waveform detected by the current waveform detecting means can be made to be more visible by the limited time length of small duty ratio. The detection of the seating, thus, can be done easily with the seating detection means.

Especially, the fuel-injection device of the present invention has a fuel-injection pump assigned for every cylinder and a solenoid valve installed between the high-pressure side and the low-pressure side, that lead to the compressor of the fuel-injection pump, so as to adjust the communication conditions between the high-pressure chamber and the low-pressure chamber, and it adjusts the injection level of the fuel to be supplied to the combustion engine from the fuel-injection pump, by opening/closing the solenoid valve with the driving pulse determined by the time delay in the solenoid valve's closing, and by the output time of the desired injection level, which is computed from the acceleration level and the engine rotation number; it also has the driving pulse correcting means to correct the driving pulse charged in the solenoid valve assigned for each cylinder corresponding to the voltage drop that occurs between the solenoid valve and the circuit to drive the solenoid valve.

Accordingly, the driving pulse charged in every solenoid is corrected according to the level of voltage drop in the wire harness connecting the solenoid valve and the driving circuit to drive the solenoid valve; therefore, against this voltage drop, which increases in proportion to the distance from the driving circuit, the driving pulse, which is adjusted to compensate for the drop, is charged in every solenoid valve, and the driving current flowing in the solenoid of every solenoid can be uniform.

Especially, a fuel-injection device of the present invention has a fuel-injection pump, and a solenoid valve installed between the high-pressure side and the low-pressure side, that lead to the compressor of the fuel-injection device, so as to adjust the communication conditions between the high-pressure chamber and the low-pressure chamber, and the fuel-injection pump's injection level of the fuel to be supplied to the combustion engine is adjusted by opening/closing the solenoid valves, and this device also has a valve closing-time delay detecting means to detect the time delay in solenoid valve's closing and a driving pulse correcting means to correct the aforementioned driving pulse, so that the time delay in valve's closing detected by this valve closing-time delay detecting means will be uniform for every solenoid valve.

Accordingly, the time delay in valve's closing for every solenoid valve assigned for every cylinder is detected by the valve closing-time delay detecting means, and in order to make this time delay in valve's closing uniform, the time delay in valve's closing is made to be smaller by raising the voltage for the driving pulse by a specific value or by making the duty ratio larger when the time delay in valve's closing is larger than a specific level, while the time delay in valve's closing is made to be larger by lowering the voltage for the driving pulse by a specific value or by making the duty ratio smaller when the time delay in valve's closing is smaller than a specific level; therefore, the time delay in valve's closing becomes uniform for every solenoid valve assigned for every controlled cylinder.

### BRIEF DESCRIPTION OF THE DRAWINGS

- Fig. 1: shows a sectional view of the general structure of a fuel-injection device.
- Fig. 2: is a functional diagramm illustrating the general control mechanism of the fuel-injection device of Fig. 1
- Fig. 3: shows a circuit diagramm of a driving circuit for the fuel-injection device.
- Fig. 4: shows a time chart of the driving circuit of Fig. 3.
- Fig. 5: shows a time chart illustrating the actual driving pulse, the voltage equivalent to current, and the motion of a valve of the fuel-injection device.
- Fig. 6: shows a circuit diagramm of another driving circuit for the fuel-injection device.
- Fig. 7: shows a time chart of the driving circuit of Fig. 6.
- Fig. 8: shows a functional diagramm illustrating a first embodiment of a control unit for the fuel-injection device according to the present invention.
- Fig. 9: is a circuit diagram illustrating a driving pulse forming unit of the control unit of Fig. 8.
- Fig. 10: shows a time chart of the driving pulse forming unit.
- Fig. 11: shows an electrical circuit diagram to drive the solenoid by the output from the driving pulse correcting unit.
- Fig. 12: shows a flowchart for the processes carried out in the driving pulse correction unit.
- Fig. 13a: is a characteristic diagram showing the supplied voltage and characteristics of the limited time length, and Fig. 13b the supplied voltage and characteristics of the driving pulse's duty ratio in the limited time length.
- Fig. 14a: shows a time chart for the driving pulse at the time of rated voltage, and Fig. 14b when the voltage is lower than the rated voltage.
- Fig. 15a: shows a time chart for the driving voltage at the time of rated voltage, Fig. 15b a time chart when the voltage is lower than the rated voltage, and Fig. 15c shows a time chart for the driving current.
- Fig. 16: shows a functional diagramm illustrating a second embodiment of the control unit for the fuel-injection device according to the present invention.
- Fig. 17: is an electrical circuit diagram showing a driving circuit of the control unit of Fig. 16 and one example of the circuit leading to each solenoid.
- Fig. 18: is a flowchart showing the control of a driving pulse correction unit of the control unit of Fig. 16.
- Fig. 19a: is a characteristic mapping graph showing the relationship between the electrical source voltage and the forced time length in each cylinder, and Fig. 19b is that showing the relationship between the electrical source voltage and the duty ratio in the limited time length.
- Fig. 20: is a time chart for the driving pulse in the first cylinder (a) and the nth cylinder (b) when the forced time length and the duty ratio of the driving pulse in the limited time length are corrected.
- Fig. 21: is a characteristic mapping graph showing the relationship between the electrical source voltage and the driving voltage and the driving voltage in each cylinder.
- Fig. 22: is a time chart for the driving pulse charged in the first cylinder (a) and the nth cylinder (b) when the driving voltage is corrected.
- Fig. 23: is a characteristic mapping graph showing the relationship between the electrical source voltage and the duty ratio in each cylinder.
- Fig. 24: is a time chart for the driving pulse charged in the first cylinder (a) and the nth cylinder (b) when the duty ratio is corrected.

### DETAILED DESCRIPTION

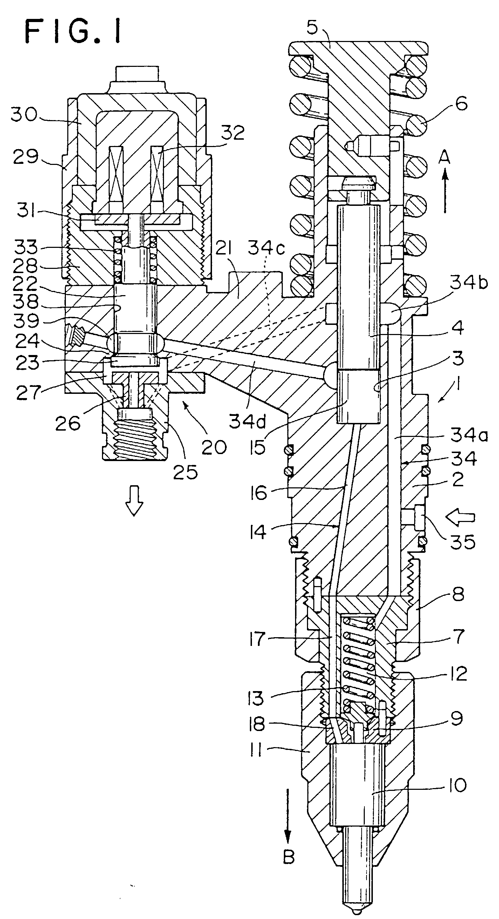

The following explanation is given on preferred embodiments with reference to the drawings, wherein Fig. 1 to 7 show subject matter used for explanatory purpose only.

Fig. 1, the fuel-injection device has a unit injector type fuel-injection pump 1, for example, a fuel-injection pump that supplies fuel by injection to each cylinder of a diesel engine, and on the base of a plunger barrel 2 of this injection pump 1, a cylinder 3, in which a plunger 4 is slidably inserted, is formed. On the plunger barrel 2, a spring receptacle is formed, and between the spring receptacle of plunger barrel 2 and tappet 5 connected with plunger 4, spring 6 is included, by which plunger 4 is constantly pushed away from plunger barrel 2 (direction indicated by an arrow A in the figure). Tappet 5 is contacted with a cam formed on a driving shaft not shown in the figure, and the driving shaft rotates, while being connected to the engine, reciprocates plunger 4 in cooperation with the aforementioned spring 6 in cylinder 3. By this reciprocating motion of plunger 4, compressor 15 takes in the fuel and compresses it as well.

On the edge of plunger barrel 2, holder 7 is mounted, with screwing holder nuts 8, to secure holder 7 on the circumference of plunger barrel 2, and on this holder 7, nozzle 10 is mounted via spacer 9; these spacer 9 and nozzle 10 are secured to the end of holder 7 with retaining nut 11 fastened to their exterior surfaces and screwed to the circumference of the end of holder 7. On holder 7, spring case 12 is formed, and by nozzle spring 13 accommodated in spring case 12, a needle valve of the nozzle, not shown in the figure, is pushed toward the tip of the nozzle (direction shown by B arrow in the figure). The structure of the nozzle is a well- known one, and its needle valve is opened when a high-pressure fuel is supplied via high-pressure passage 14 mentioned below, so that the fuel is injected from injection hole made in the tip of the nozzle.

High-pressure passage 14 consists of passage 16 formed inside plunger barrel 2, with its one end opened into compressor 15, passage 17 formed in holder and leading to passage 16, passage 18 formed in spacer 9 and leading to passage 17, and of a passage (not shown in the figure) formed in nozzle 10 and leading to passage 18.

On one side of plunger barrel 2, valve housing 21 in which solenoid valve 20, mentioned later, is installed is integrally installed and extended, and on the plunger barrel and on valve housing 21, fuel-supplying passage 34 to supply the fuel to the aforementioned compressor 15 is installed. This fuel-supplying passage 34 consists of: first fuel-supplying passage 34a, to which the fuel is supplied from fuel-intake 35 formed on the side of plunger barrel 2; loop-shaped channel 34b connected to this first fuel-supplying passage 34a and formed on one part of cylinder 3 on which plunger 4 is constantly sliding; second fuel-supplying passage 34c connected to this loop-shaped channel 34b and leading to valve case 27 of solenoid valve 20; third fuel-supplying passage 34d, one end of which is connected to loop-shaped groove 39 made around rod 22 so as to lead to valve case 27 via the valve, and other end of which is connected to the aforementioned compressor 15.

The supply of the fuel to compressor 15 is adjusted by solenoid valve 20, and rod 22 of this solenoid valve 20 is slidably inserted in sliding hole 38 made in valve housing 21. On valve housing 21, valve seat 24 formed on the tip of rod 22 and contacted with poppet valve 23 is mounted, and header 25 is screwed to valve housing 21 to cover valve 23. On the plane where header 25 and valve housing 21 contact with each other, valve case 27 is formed surrounded by header 25 and valve housing 21, and on this valve case 27, stopper 26 of the valve is secured on the side of header 25 so as to face valve 23.

Rod 22 is inserted through holder 28 that is screwed to the opposite side of header 25 of valve housing 21, and is connected to armature 31 positioned between the holder 28 and solenoid barrel 30 fastened to holder 28 with holder nut 29. This armature 31 is facing solenoid 32 held in solenoid barrel 30. In the aforementioned holder 28, spring 33 constantly pushing valve 23 away from valve seat 24 is accommodated; valve 23 normally stays apart from valve seat 24, and the valve 23 is driven to be brought into contact with valve seat 24 when armature 31 is attracted to solenoid 32 by the current conduction to solenoid 32.

The diameter of rod 22 is slightly smaller in front of valve 23, and loop-shaped groove 39 having a large diameter than that is formed to face the portion of the rod with a smaller diameter in loop-shaped groove 39. To this loop-shaped 39 is connected to the aforementioned fuel-supplying passage 34d. To the aforementioned valve case 27, as mentioned earlier, second fuel-supplying passage 34c is connected, and the fuel is constantly supplied to fill valve case 27 via fuel-supplying passage 34c. Therefore, when valve 23 is moved away from valve seat 24, and plunger 4 is taking the fuel in, the fuel filled in valve case 27 reaches loop-shaped groove 39 through the space between rod 22 and sliding hole 38, and is supplied from this loop-shaped groove 39 to compressor 15 via third fuel-supplying passage 34d. The fuel supplying-pressure at this time is approximately 5 kg/cm².

When solenoid is conducted, in other words, at the time point when valve 23 is seated on valve seat 24, fuel-supply passage 34 is shut off by solenoid valve 20, and the fuel which has been already supplied to compressor 15 is compressed, by the compressing process of the aforementioned plunger 4, to be supplied to nozzle 10 via high-pressure passage 14. This pressure transport of the fuel is completed when the conduction to solenoid 32 is stopped, a part of the high-pressure fuel on the high-pressure side (high-pressure passage 14, compressor 15, and third fuel-supplying passage 34d) is returned to valve case 27 upon valve 23's moving away from valve seat 24, and the fuel-pressure in the compressor is reduced.

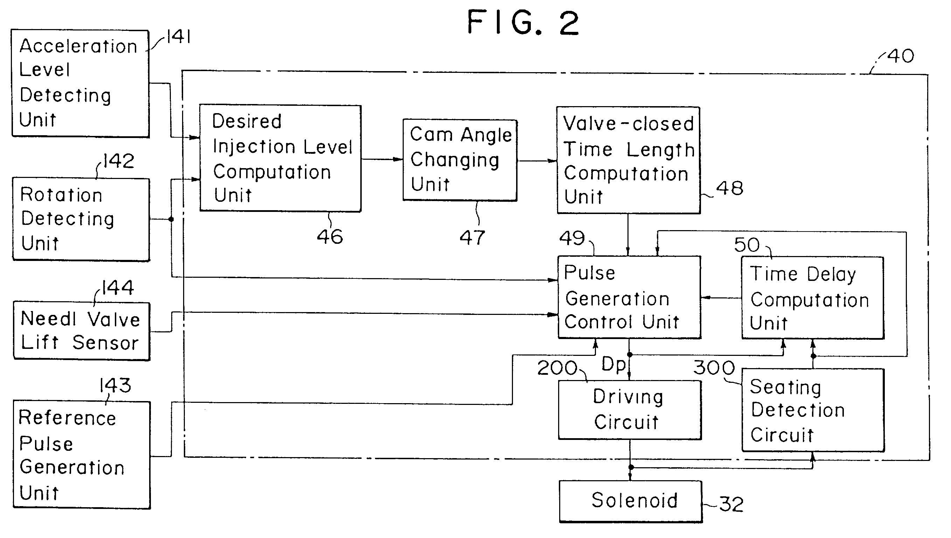

The conduction to the aforementioned solenoid 32 is controlled by control unit 40, as shown in Fig. 2. Control unit 40 consists of an A/D converter not shown in the figure, multiplexer, microcomputer, driving circuit 200 mentioned below, and of seating detection circuit 300, and in this control unit 40, each signals are input from each of acceleration level detecting unit 141 to detect the level of pushing the acceleration pedal (acceleration level), engine rotation detecting unit 142, reference pulse generating unit 143 which is attached to the driving shaft and generates pulses every time the driving shaft reaches the reference angle position, and from needle valve lift sensor 144 to detect the time point of the needle valve's lifting.

Fig. 2 shows, for convenience, a functional diagram for the processes carried out in the aforementioned control unit 40. The processes carried out in control unit 40 are explained below with reference to this diagram. The output signals from acceleration level detecting unit 141 and engine rotation detecting unit 142 are input in the desired injection level computation unit 46, and based on these input signals, the most desirable injection level suitable for the then driving conditions of the engine is computed from the map data and is put out as the desired injection level signals.

Cam angle converter 47 inputs the aforementioned desired injection signals, computes, based on the specific map data, the cam angle necessary to obtain the aforementioned most desirable injection level, according to the engine rotation number, and puts out the result as cam angle signals.

Valve-closed time length computation unit 48, receiving the aforementioned cam angle signals, converts the cam angle signals to the time necessary for the cam to rotate by the cam angle computed at cam angle conversion unit 47. In other words, at this unit, the necessary time length (the valve-closed time length) T_{q}, from the time point when solenoid valve closes and the injection begins until the time point when the desired injection amount has been injected, is computed.

The valve-closed time length T_{q} computed at this unit does not include the time delay Tᵥ that is the time length during which valve 23 remaining apart from valve seat 24 begins to move and completely is seated on valve seat 24. Therefore, the driving pulse width T_{d} which is actually necessary to drive solenoid valve 20 consists of the sum of T_{q} and Tᵥ ( T_{d} = T_{q} + Tᵥ ).

Pulse generation control unit 49 adds the valve-closed time length T_{q} computed at the aforementioned valve-closed time length computation unit 48 to the time delay Tᵥ computed at time delay computation unit 50, and determines the time to put out the driving pulse Dₚ having the driving pulse width T_{d} determined by the sum of T_{q} and Tᵥ, to driving circuit 200; more specifically, it determines the most adequate timing to start the fuel-injection, on the bases of the reference signals generated from reference pulse generating unit 143, the injection timing signals generated from needle valve lift sensor 144, and the rotation signals generated from rotation detecting unit 142.

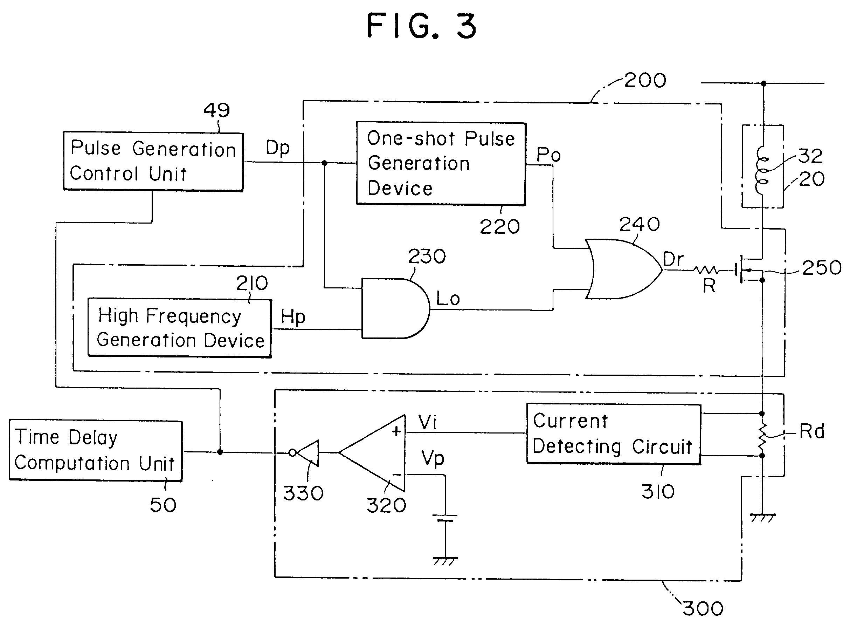

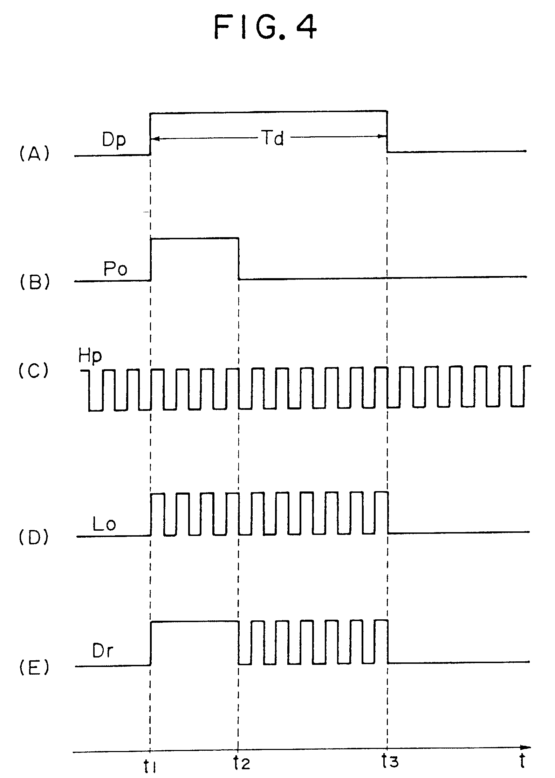

Driving circuit 200 consists of high-frequency generation device 210, one-shot-pulse generation device 220, AND circuit 230, OR circuit 240, and electric field effect type transistor (FET) 250, as specifically shown in Fig. 3, and the driving pulse Dₚ (shown in Fig. 4 (A)) generated from the aforementioned pulse generation control unit 49 is input in the aforementioned one-shot- pulse generation device 220, and in one of the input terminals of AND circuit 230.

One-shot-pulse generation device 220 generates pulse Pₒ having a large duty ratio (100 % in this case), shown by the specific time length (t₁ - t₂) from the time point when the driving pulse Dₚ rises, as shown in Fig. 4 (B). This specific time length is preliminarily defined on the bases of the experiments.

In AND circuit 230, high-frequency waves Hₚ are input as well as the aforementioned driving pulse Dₚ, as shown in Fig. 4 (C) from high-frequency wave generation device 210, and thereby AND circuit 230 puts out pulse Lₒ which becomes high-frequency waves only for the time length t₁ - t₃, as shown in Fig. 4 (D).

The pulse Po put out from the aforementioned one-shot-pulse generation device 220 and the pulse Lₒ put out from AND circuit 230 are input in OR circuit 240, and thereby, as shown in Fig. 4 (E), the actual driving pulse Dᵣ having a large duty ratio in the time length t₁ - t₂ (forced time length) and a small duty ratio in the time length t₂ - t₃ (limited time length) is put out from OR circuit 240.

This actual driving pulse Dᵣ is input in the gate of FET 250 via resistor R, and by this actual driving pulse Dᵣ, the drain and the source in FET 250 are conducted to each other to supply the current to solenoid 32 and to drive valve 23 in direction of closing.

Accordingly, since the actual driving pulse is composed of the driving pulse having a large duty ratio in the forced time length and of the driving pulse having a small duty ratio in the limited time length, the motion of valve 23 can be accelerated by the pulse having a large duty ratio in the beginning of solenoid valve 20's driving when greater driving force is needed, and during the subsequent time period after the beginning of the valve's driving when the valve's closing needs to be detected, the actual voltage can be lowered by the pulse having a small duty ratio so as to make a changing point of the current (an inflection point in the current) more visible at the time of valve 23's seating.

Seating detection device 300 detects the valve 23's seating by detecting the curving point of the current generated when valve 23 seats in valve seat 24, and it consists of the resistor R_{d}, connected in series to solenoid 32, current detecting circuit 310 to detect the current by detecting the voltage on both sides of this resistor, comparator 320 to compare the voltage Vᵢ corresponding to this detected current with the threshold voltage Vₚ, and invertor 330.

When the actual driving pulse Dᵣ is charged in this seating detection device 300, the current flowing in solenoid 32 flows through the resistor R_{d}, and is detected at current detecting circuit 310, where the current is converted to the voltage value Vᵢ corresponding to the current value to be input in the noninverting terminal of comparator 320.

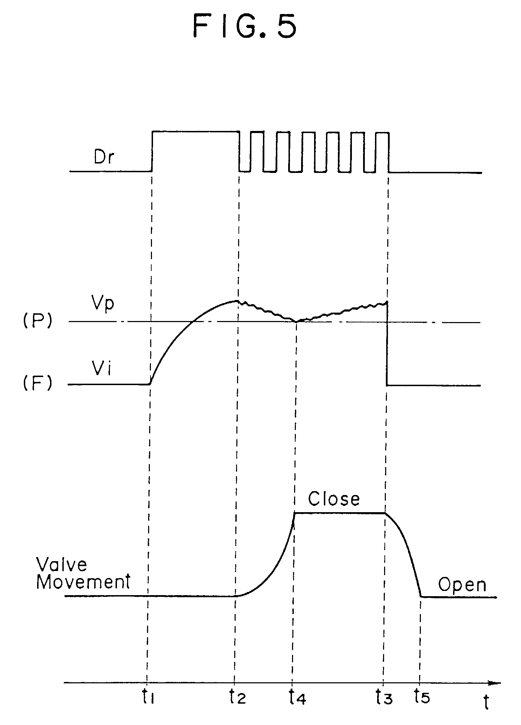

This voltage value Vᵢ gradually rises during the time forced length (t₁ - t₂), and gradually declines during the limited time length (t₂ - t₃) until the seating time point (t₄), being followed by the gradual increase that continues from the time point at which the seating begins until its completion (t₃), as shown in Fig. 5 (F). The solenoid valve's seating time point can be, thus, detected from the characteristic that the current inflection point is formed at the time when solenoid valve 20 is seated.

In other words, in the inverting terminal of the aforementioned comparator 320, the threshold voltage Vₚ having a specific level of voltage is input, and from this comparator 320, the seating signals are supplied to the time delay computation unit 50 and pulse generation control unit 49, since the output becomes L at the time point (t₄) when the aforementioned voltage value Vᵢ becomes lower than the threshold voltage Vₚ, and the output of invertor 330 becomes H. The minimal point (inflection point) caused by the valve 23's seating is judged from the voltage, but the current inflection point for the seating may be judged by the differentiating signal by installing a differentiating circuit.

As to the computation of the time delay in valve's closing Tᵥ, derived from the motion of the valve, and computed in the time delay computation unit 50, its timing begins, as soon as the driving pulse is input in the time delay computation unit 50, at the point when the Dp rises, and ends at the point when the seating signal put out from seating detection circuit 300 is input.

The time length of valve 23's being pushed away from valve seat 24, that is shown by t₃ - t₅ in Fig. 5, is defined by the pushing force of spring 33.

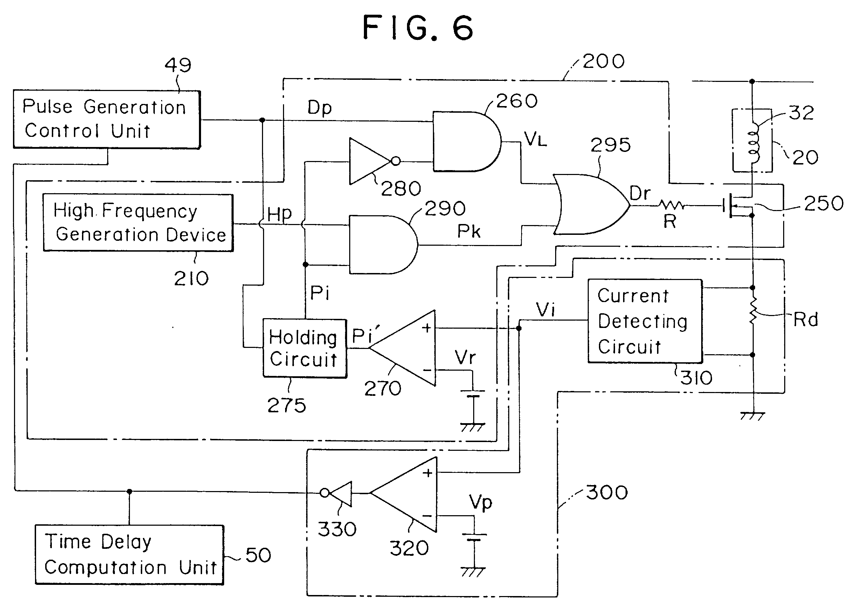

Other example of an embodiment is explained below with reference to Fig. 6. The same components as shown in the aforementioned example are identified by the same number.

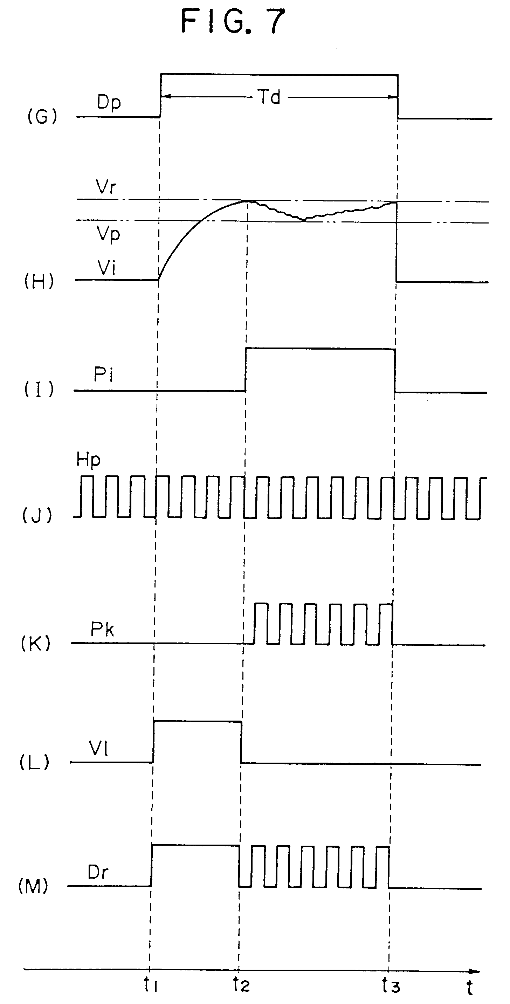

The driving circuit 200 of this example consists of high- frequency generation device 210, two AND circuits 260, 290, OR circuit 295, resistor R, FET 250, comparator 270, and of invertor 280. With this driving circuit 200, the driving pulse Dₚ (Fig. 7 (G)) put out from the aforementioned pulse generation control unit 49 is input in one end of AND circuit 260. In the other end of this AND circuit 260, signal Pᵢ shown in Fig. 7 (I) is input via invertor 280. This signal Pᵢ is formed at holding circuit 275, where driving pulse Dₚ put out from pulse generation control unit 49 is input, as well as the signal Pᵢ' that is put out from comparator 270 when the voltage Vᵢ (Fig. 7 (H)) corresponding to the current flowing in solenoid 32 put out from current detecting circuit 310 in seating detection circuit 300 becomes higher than the voltage Vᵣ. This holding circuit 275, once the signal Pᵢ' is input, defines its output signal, at this point, as Hᵢ, and forms the signal Pᵢ by retaining this condition until the completion time of the driving pulse Dₚ.

Thereby, the output signal V_{L} (Fig. 7 (L)) of AND circuit 260 forms a rectangular waveform having a duty ratio 100% for the time length t₁ - t₂, and is input in one end of OR circuit 295. In the other end of OR circuit 295, high-frequency signal Pₖ (Fig. 7 (k)) that becomes high-frequency waves only for the limited time length (t₂ - t₃) that is formed when high-frequency waves Hₚ (Fig. 7 (J)) put out from the aforementioned high-frequency wave generation device and the aforementioned signal Pᵢ are input in AND circuit 290. Thus, the same actual driving pulse Dᵣ as in the aforementioned example can be obtained from the output of OR circuit 295.

In this driving circuit 200, unlike the aforementioned example, wherein the driving circuit's forced time length was defined as a specific time length from the result of the experiments, a specific consideration for defining the forced time length is not necessary, since the forced time length ends when the current reaches a specific value or higher.

As explained above, the forced time length wherein the duty ratio of the driving pulse supplied to the solenoid is large and the limited time length wherein the duty ratio is small are established; therefore, the responsiveness of the solenoid valve can be improved to be faster by the driving pulse having the large duty ratio during the forced time length, and the detection of the solenoid valve's seating can be performed definitely by the driving pulse having the small duty ratio during the limited time length.

The following explanation is given on an example of the control of the solenoid valve to secure the responsiveness of the solenoid valve, by correcting the driving pulse according to the changes in supplied voltage.

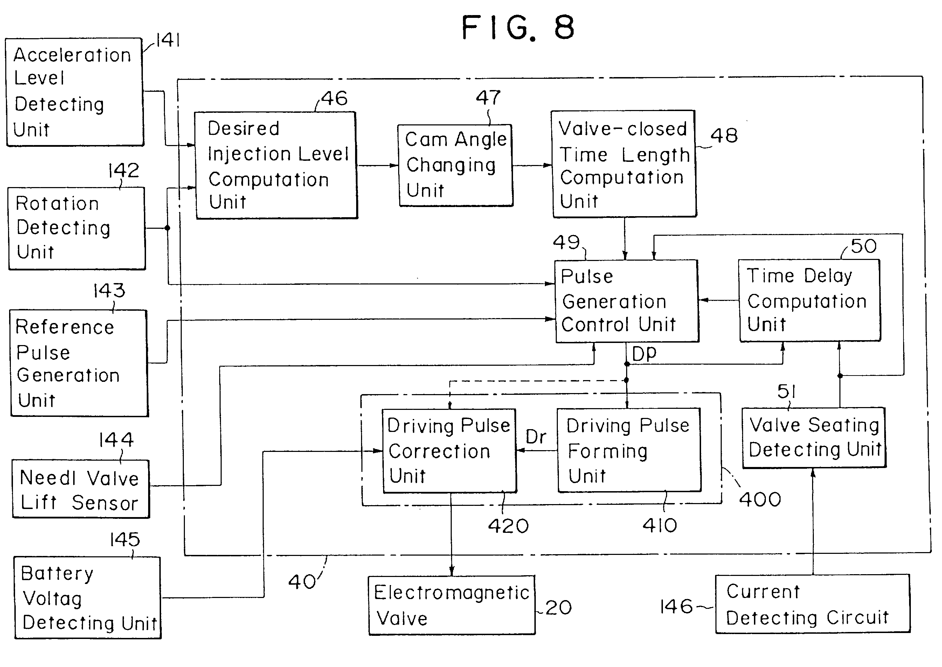

Of the hardware structure of Fig. 1 explained above, control unit 40 to control solenoid valve 20 is shown in Fig. 8. Control unit 40 consists of an A/D converter, multiplexer, microcomputer, driving circuit 400, which are not shown in the figure; in the control unit, signals are input from each of acceleration level detection unit 141 to detect the pushing level of the acceleration (acceleration level), rotation detecting unit 142 to detect the engine rotation condition, reference pulse generating unit 143 that is attached to the driving shaft and generates the pulse every time the driving shaft reaches the reference angle position, needle valve lift sensor 144 to detect the time point of needle valve's lifting, current detecting circuit 146 to detect the value of the current flowing in solenoid valve 20 and to put out the corresponding signal, and of battery voltage detecting unit 145 to detect electrical source voltage (battery voltage) supplied to the solenoid valve.

In Fig. 8, the processes carried out in the aforementioned control unit 40 is shown for convenience by a functional diagram. The following explanation is given on the components which are not shown in the functional diagram in Fig. 2. The desired injection level computation unit 46, cam angle conversion unit 47, valve- closed time length computation unit 48, pulse generation control unit 49, and time delay computation unit 50 are already shown in Fig. 2, so the explanation is omitted here.

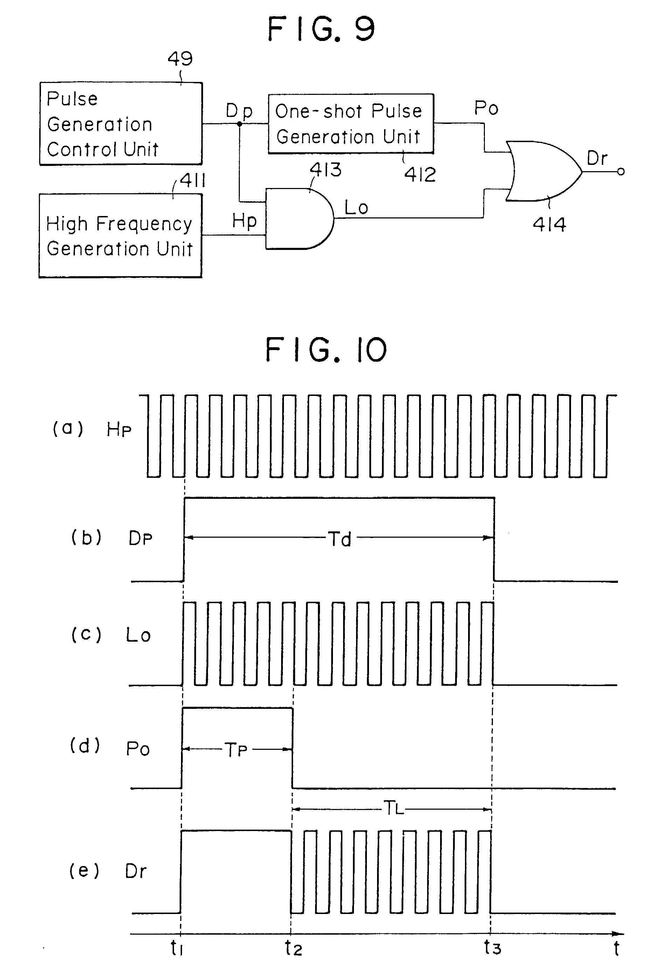

Driving circuit 400 consists of driving pulse forming unit 410 and driving pulse correcting unit 420. Driving pulse forming unit 410 consists of high-frequency wave generating unit 411, one-shot- pulse generating unit 412, AND circuit 413, and of OR circuit 414, as shown in Fig. 9. The driving pulse Dₚ (Fig. 5 (b)) generated from the aforementioned pulse generation control unit 49 is input in the aforementioned one-shot-pulse generating unit 412 and in one of the input terminals of AND circuit 413.

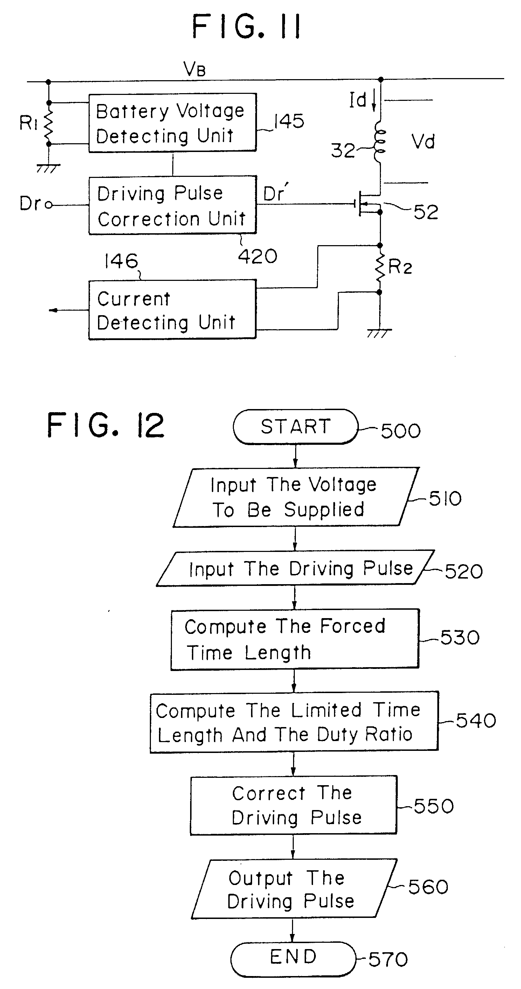

One-shot-pulse generating unit 412 generates the pulse Po having a large duty ratio (100% in this case) shown by a specific time length (t₁ - t₂) beginning from the rising time of this driving pulse, as shown in Fig. 10 (d). This specific time length is preliminarily determined based on the result of the experiments.

In other input terminal of AND circuit 413, the high-frequency high-frequency waves Hₚ shown in Fig. 10 (a) are input from generating unit 411, and thereby AND circuit 413 puts out the pulse Lₒ which forms high-frequency waves only during the time length t₁ - t₃.

Pulse Pₒ put out from the aforementioned one-shot-pulse unit 412 and the pulse Lₒ put out from AND circuit 413 are input in OR circuit 414, and thereby from OR circuit 414, the driving pulse Dᵣ containing the pulse with a large duty ratio during the time length t₁ - t₂ (the forced time length Tₚ) and the pulse with a small duty ratio during the time length t₂ - t₃ (the limited time length T_{L}) are put out, as shown in Fig. 10 (e).

Accordingly, the time delay in valve's closing can be shortened, and simultaneously the driving pulse Dᵣ most suitable for detecting the valve's closing time is formed.

This driving pulse Dᵣ is, according to the process in the flowchart of Fig. 12, corrected to the driving pulse Dᵣ' in driving pulse correcting unit 420, for example, having the structure shown in Fig. 11. This control begins at step 500, and in step 510, the voltage on both sides of the resistor R₁ installed between the electrical source line of Fig. 11 and the ground is converted into signals by battery voltage detecting unit 145, and is input as the supplied voltage (battery voltage) V_{B}. In addition, in step 520, the aforementioned driving pulse Dᵣ is input.

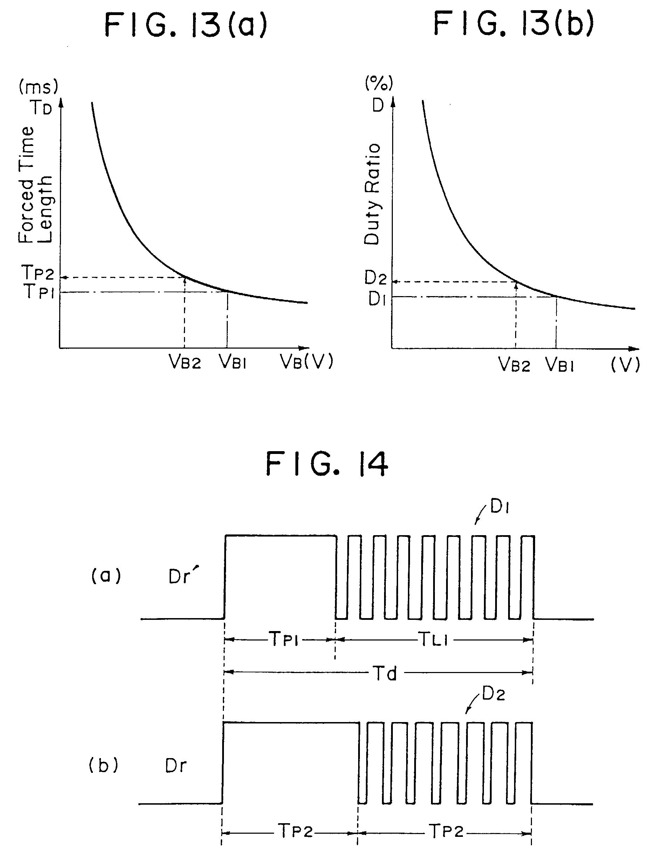

In step 530, the forced time length Tₚ is computed from the aforementioned voltage V_{B}, according to the characteristic map shown in Fig. 13 (a). With this characteristic, the forced time length becomes longer from Tₚ₁ to Tₚ₂, when the battery voltage V_{B} is dropped from the rated voltage V_{B1} to voltage V_{B2}, as shown in Fig. 13 (a). Since the forced time length T_{L2} is the value obtained by subtracting the aforementioned forced time length Tₚ₂ from the driving time length T_{d}, it becomes shorter by the same length as the extended length of the forced time length.

In step 540, the duty ratio D is computed from the aforementioned battery voltage V_{B}, according to the characteristic map in Fig. 13 (b). With this characteristic, the duty ratio increases from D₁ to D₂ when battery V_{B} is dropped from the rated voltage V_{B1} to voltage V_{B2}.

In step 550, the driving pulse is corrected, on the bases of the processes in the aforementioned steps 530, 540, and the corrected driving pulse Dᵣ' is formed. More specifically, if a difference between the forced time length Tₚ and the driving pulse Dᵣ computed in step 530 is larger than a specific value, in order to adjust this difference, the difference between the forced time length Tₚ computed in step 530 and the forced time length Tₚ of the driving pulse Dᵣ is added to the forced time length Tₚ of the driving pulse Dᵣ, or the forced time length Tₚ of the driving time pulse is replaced with the forced time length Tₚ computed in step 530 to make the correction. If a difference between the duty ratio computed in step 540 and the duty ratio of the driving pulse Dᵣ is larger than a specific value, in order to adjust this difference, the difference between the duty ratio D computed in step 540 and the duty ratio of the driving pulse Dᵣ is added to the duty ratio of the driving pulse Dᵣ, or the duty ratio of the driving pulse Dᵣ is replaced with the duty ratio D computed in step 540 to make the correction.

As to the method of correcting the driving pulse, it is possible to directly form the corrected driving pulse by inputting the output Dₚ of pulse generating controlling unit 49 in driving pulse correction unit 420, without installing driving pulse forming unit 410, and by computing the forced time length T_{D} and the duty ratio D from the characteristic map in Fig. 13, on the bases of the battery voltage V_{B}, as shown by the dotted line in Fig. 8.

This driving pulse Dᵣ' is, in Step 560, put out from the gate terminal of the field effect transistor (FET) 52 shown in Fig. 11. Once this driving pulse Dᵣ' is input in the gate terminal of FET 52, the source and the drain in FET 52 become conductive, and therefore the current flows to solenoid 32, driving valve 23 in direction of closing.

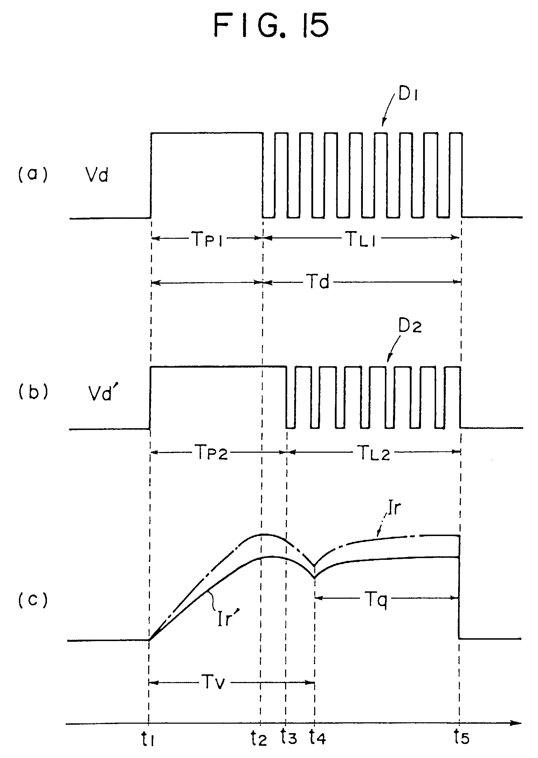

Accordingly, since the driving pulse Dᵣ' at the time of rated voltage V_{R1} shown in Fig. 14(a) is composed of the driving pulse having the large duty ratio during the forced time length T_{P1} and of the driving pulse having the duty ratio D₁ during the limited time length T_{L1}, the driving voltage V_{d} changes to the level shown in Fig. 15(a); therefore, in the beginning driving period of solenoid 20 when greater driving force is needed, valve 23's motion can be accelerated by the pulses having a large duty ratio, while in the subsequent driving period when the valve's closing time needs to be detected, the changing point of the current (current inflection point) at the time of valve 23's seating on valve seat 24 (t₄) can made to be clearly visible by reducing the actual voltage with the pulses having a small duty ratio. The current Iᵣ at this time is shown by the dotted line in Fig. 15 (c).

If the battery voltage V_{B} is dropped due to a drop of the battery capacity and declines to the voltage V_{B2} lower than voltage V_{B1}, as shown in Fig. 14 (b), the driving voltage V_{d}' will be the one shown in Fig. 15 (b), since the driving pulse Dᵣ' has the forced time length Tₚ₂ for the driving pulse with a large duty ratio, corrected by the battery voltage V_{B2} in the longer time length than the limited time length of the aforementioned rated voltage, and has the limited time length T_{L2} for the driving pulse with the duty ratio D₂ larger than the aforementioned duty ratio D₁. Thereby, the voltage drop is compensated, and the driving force of the solenoid is secured; simultaneously the current Iᵣ' will be as that shown in Fig. 15 (c) and the longer seating time length which could be caused by the drop in the battery voltage V_{B} can be prevented, because of the larger duty ratio for the limited time length.

The current detecting circuit 146 detects the current flowing in solenoid 32 through driving circuit 400, by detecting the voltage on both sides of resistor R₂ connected, in series, to solenoid 32, and puts out the signal corresponding to this current value; this signal is sent to seating detection unit 51 inside control unit 40. This seating detecting unit 51 detects the seating time (T₄) by catching the inflection point of the current waveform, as shown in Fig. 15 (c), and puts out the signals to the aforementioned time delay computation unit 50 and pulse generation control unit 49.

In this example of the preferred embodiment, the case when the supplied voltage is dropped was explained. However, in the case when the supplied voltage is raised, the forced time length and the duty ratio of the driving pulse can be adjusted using the characteristic map. More specifically, when the supplied voltage is raised, the forced time length can be set short, and the duty ratio of the driving pulse for the forced time length can be set small in order to eliminate the inconveniences caused by the rise in the supplied voltage (difficulty in detecting the seating time point).

As explained above, according to this invention, the forced time length to shorten the solenoid valve's response time of the driving pulse supplied to the solenoid, and the duty ratio of the driving pulse in the limited time length that makes the detection of the solenoid's valve' seating time easy, are corrected by the detected value of the electrical source voltage (battery voltage), therefore, the changes in the seating time caused by a drop or rise in the electrical source voltage can be prevented, and the responsiveness of stable injection can be secured against the changes in the supplied voltage.

The following explanation is given on the example of control, wherein the driving pulse supplied to every solenoid is corrected, taking the voltage drop in the wire harness into account, and the non-uniform responsiveness of every solenoid is prevented.

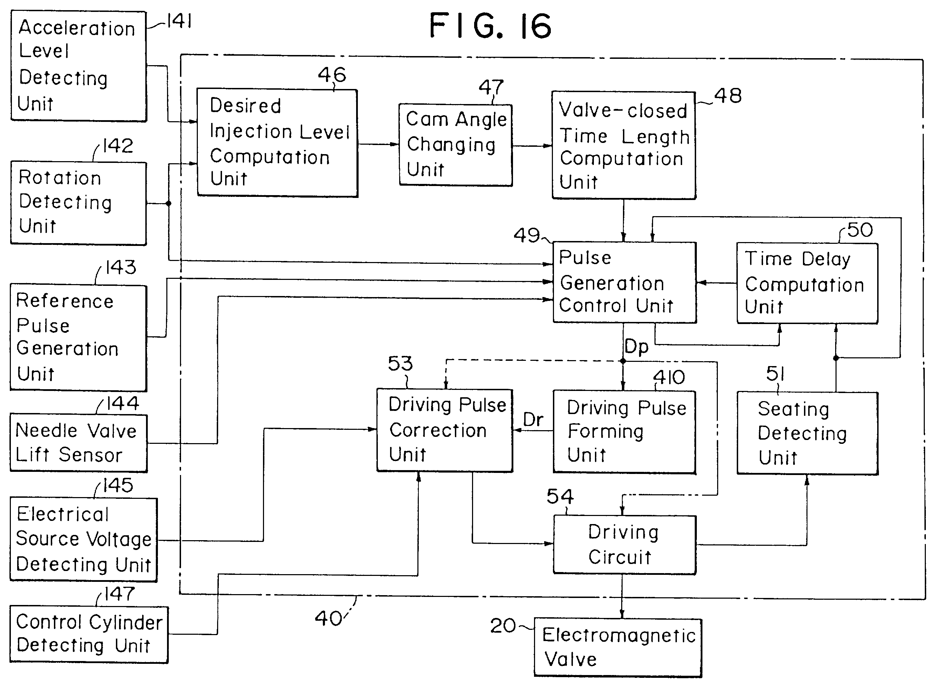

Of the hardware structure of Fig. 1, control unit 40 to control solenoid valve 20 is shown in Fig. 16. Control unit 40 consists of an A/D converter, multiplexer, microcomputer, which are not shown in the figure, and in the control unit 40, signals are input from each of acceleration level detecting unit 141, rotation detecting unit 142 to detect the rotation condition of engine, reference pulse generating unit 143 that is attached to the driving shaft and generates pulses every time the driving shaft reaches the reference angle position, needle valve lift sensor 144 to detect the lifting time of the needle valve, electrical voltage detecting unit 145 to detect the electrical voltage (battery voltage), and from controlled cylinder detecting unit 147 to detect the cylinders (controlled cylinders) that are controlled.

In Fig. 16, the processes carried out in the aforementioned control unit 40 are, for convenience, shown in a functional diagram. The explanation is given below on the components which are not shown in the functional diagram of Fig. 8. In other words, the desired injection level computation unit 46, cam angle conversion unit 47, valve-closed time length computation unit 48, pulse generation control unit 49, time delay computation unit 50, and seating detection unit 51 are the same as shown in Fig. 8, therefore, are not explained.

The driving pulse Dₚ formed in pulse generation control unit 49 is sent to driving pulse forming unit 410, where the reference driving pulse Dᵣ is formed based on this driving pulse Dₚ. Driving pulse forming unit 410 is, for example, similar to that shown in Fig. 9. As shown in Fig. 10 (e), the driving pulse Dᵣ composed of the driving pulse, having a large duty ratio (100% in this case) for the time length (forced time length Tₚ), and of the driving pulse having a small duty ratio for the time length (limited time length T_{L}), is formed in this unit. As explained above, this driving pulse Dᵣ is formed to shorten the time delay in valve's seating by the driving pulse of the forced time length, and to make the detection of the solenoid valve's seating time point easier by the driving pulse of the limited time length.

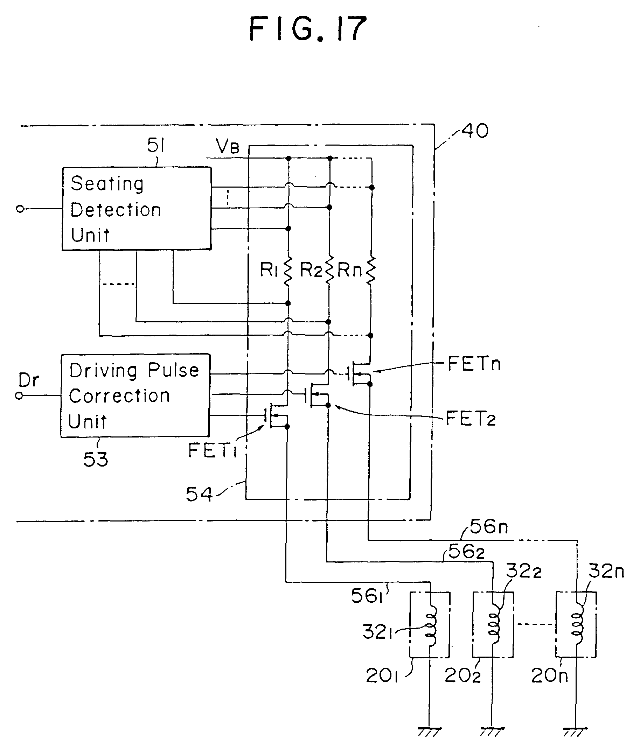

This driving pulse Dᵣ is, as shown in Fig. 17, corrected by driving pulse correction unit 53 mentioned below, according to a specific program, and sent to driving circuit 54.

This driving circuit 54 consists of field-effect resistors FET₁, FET₂, ..., FETₙ that are connected, via wire harnesses 56₁, 56₂, ..., 56ₙ, to solenoids 32₁, 32₂, ..., 32ₙ of solenoid valves 20₁, 20₂,..., 20ₙ assigned for every solenoid respectively, and of resistors R₁, R₂, ..., Rₙ to detect the current flowing in these field-effect transistors FET₁, FET₂, ..., FETₙ, and the driving pulses Dᵣ₁, Dᵣ₂, ..., Dᵣₙ, corrected by driving pulse correcting unit 53, are charged in the gates of FET₁, FET₂, ..., FETₙ respectively to make each circuit conductive.

By the voltage on both ends of the aforementioned resistors R₁, R₂, ..., Rₙ, the current flowing in each resistor R₁, R₂, ..., Rₙ is detected, and from this current value, seating detection unit 51 detects the minimal value of the current value required for the solenoid valve to be seated to detect the solenoid valve's seating time.

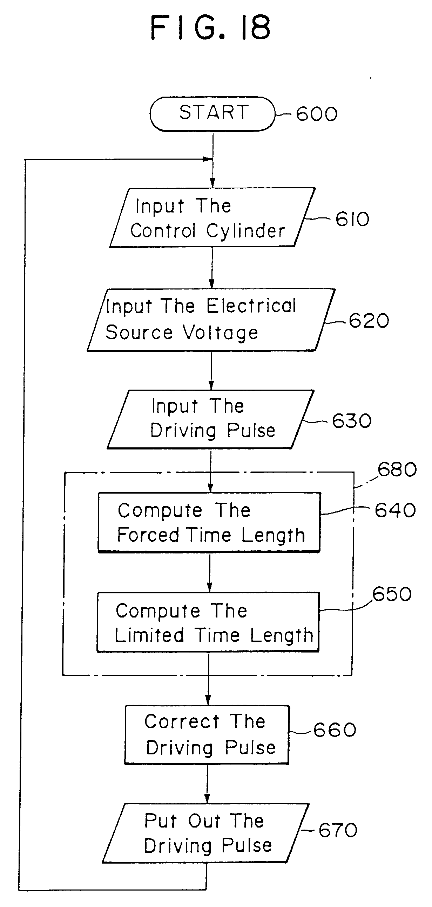

The correction of the driving pulse Dᵣ made in the driving pulse correcting unit 53 is shown in a flowchart in Fig. 18, which is explained below.

In the correction of the driving pulse started in step 600, the information on which cylinder is to be controlled this time, out of the cylinders detected by the aforementioned controlled cylinder detecting unit 147, is input (the k-th cylinder), and the value α of the electrical source voltage (battery voltage) V_{B} is input in step 620, which is followed by step 630 to input the driving pulse Dᵣ.

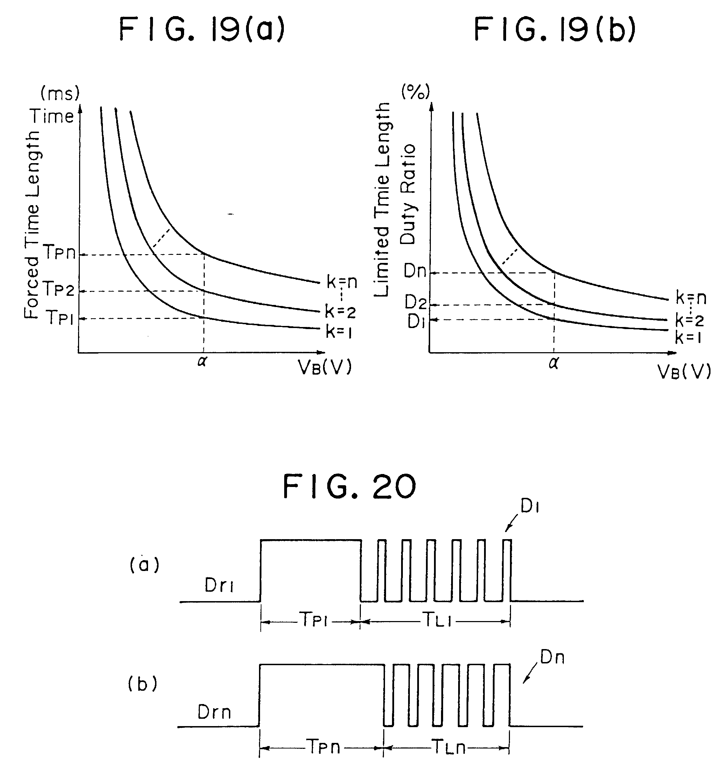

In step 640, the forced time length Tₚ is computed from the electrical source voltage V_{B}, based on the characteristics of the k-th cylinder, according to the map prepared in Fig. 19 (a). More specifically, if the controlled cylinder is the first cylinder, the forced time length Tₚ₁ is obtained from the value α of electrical source voltage V_{B}, based on the characteristic indicated by k = 1. If the controlled cylinder is the second cylinder, the forced time length Tₚ₂ is obtained likewise, and if it is the n-th cylinder, the forced time length Tₚₙ is obtained. Accordingly, the farther the cylinder's position is to driving circuit 54, the longer its forced time length is.

In step 650, the duty ratio of the driving pulse in the limited time length T_{L} is computed from the electrical source voltage V_{B}, based on the characteristic of the k-th cylinder, according to the map in Fig. 19 (b). More specifically, if the controlled cylinder is the first cylinder, duty ratio D₁ is obtained from the value of the electrical source voltage V_{B}, based on the characteristic indicated by k = 1. If the controlled cylinder is the second cylinder, the duty ratio D₂ is obtained, likewise, and in the case of the n-th cylinder, the duty ratio Dₙ is obtained. Accordingly, the farther the cylinder's position is to driving circuit 54, the larger its duty ratio is. The steps 640, 650 surrounded by the broken line in Fig. 18 will function as driving pulse correction computation step 680.

In step 660, the driving pulse Dᵣ is corrected, on the bases of the force time length Tₚ, which are Tₚ₁, T_{p2,} ..., Tₚₙ, computed in the aforementioned step 640, of the limited time length T_{L} determined by the forced time length Tp and by the driving pulse width T_{d}, and of the duty ratio D₁, D₂, ..., Dₙ in the limited time length, computed in the aforementioned step 650. More specifically, if the controlled cylinder is the first cylinder nearest to driving circuit 54, the driving pulse Dᵣ has the forced time length Tₚ₁ and the limited time length T_{L1}, as shown in Fig. 20 (a), and is corrected to driving pulse Dᵣ₁, the duty ratio of which is D₁ in the limited time length. If the controlled cylinder is the nth cylinder farthest to driving circuit 54, the driving pulse Dᵣ has the forced time length Tₚₙ and the limited time length T_{Ln}, and is corrected to the driving pulse Dᵣₙ, the duty ratio of which is Dₙ, as shown in Fig. 20 (b).

There are various processes to correct the driving pulse, on the bases of forced time length Tₚ computed in step 640, and of the duty ratio in the limited time length computed in step 650. However, if a difference between the forced time length computed in the aforementioned step 640 and the forced time length of the pulse Dᵣ exceeds a specific value, in order to adjust the difference, the difference between the forced time length computed in step 640 and the forced time length of the driving pulse Dᵣ is added to the forced time length of the driving pulse Dᵣ, or the forced time length of the driving pulse Dᵣ is replaced with the forced time length computed in step 640 to make the correction. If a difference between the duty ratio computed in step 650 and the duty ratio of the driving pulse Dᵣ exceeds a specific value, in order to adjust the difference, the difference of the duty ratio computed in step 650 and of the duty ratio of the driving pulse Dᵣ is added to the duty ratio of the duty pulse Dᵣ, or the duty ratio of the driving pulse Dᵣ is replaced with the duty ratio D computed in step 650. As to the method of correcting the driving pulse, the output Dₚ of pulse generation control unit 49 may be input directly in driving pulse correcting unit 53 without installing the driving pulse forming unit 410, as shown by the dotted line in Fig. 16, and the corrected driving pulse may be directly formed, by computing the forced time length and the duty ratio for every cylinder from the characteristic map in Fig. 19.

The corrected driving pulses Dᵣ₁, Dᵣ₂, ..., Dᵣₙ are put out from driving circuit 54 in step 670. The driving voltage charged in each solenoid valve 20₁, 20₂, ..., 20ₙ, after the voltage is dropped in each of the wire harnesses 56₁, 56₂, ..., 56ₙ, becomes uniform when charged in each solenoid 32₁, 32₂, ..., 32ₙ of the respective solenoid valve 20₁, 20₂, 20ₙ. Therefore, the driving current flowing each of solenoids 32₁, 32₂, ...32ₙ is uniform, making the responsiveness of each of solenoid valves 20₁, 20₂, ...20ₙ uniform.

In the aforementioned example of the preferred embodiment, the correction of the driving pulse having the forced time length and the limited time length was explained; however, when the aforementioned pulse Dr is charged directly in driving circuit 54, the driving voltage is computed, as shown by the broken line in Fig. 16, and as shown by the broken line in Fig. 18 for step 680.

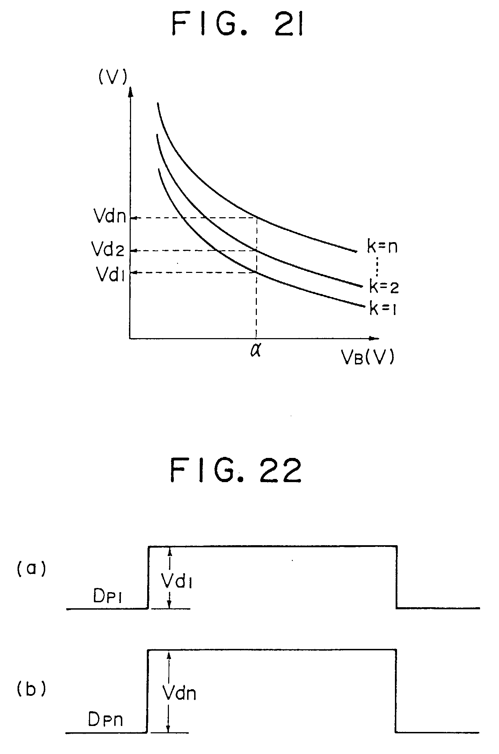

More specifically, the driving voltage is computed from the value α of electrical source voltage V_{B}, based on the characteristic of the k-th cylinder shown in Fig. 21. For example, in the case of the first cylinder, the driving voltage V_{d1} is computed from the characteristic k = 1; in the case of the second cylinder, the driving voltage V_{d2} is computed from the characteristic of k = 2; in the case of the n-th cylinder, the driving voltage Vdn is computed; the driving voltage grows larger in this order from the first to n-th cylinder.

Accordingly, in step 660, the driving pulse Dp is corrected to driving pulse Dp1 of driving voltage Vd1, in the case when the controlled cylinder is the nearest one to driving circuit 54, as shown in Fig. 22 (a), and in the case when the controlled cylinder is the n-th one farthest to the driving circuit 54, the driving pulse Dₚ is corrected to the driving pulse Dₚₙ of the driving voltage V_{dn} wherein the driving voltage grows higher for every cylinder, beginning with the first cylinder, as shown in Fig. 22 (b). Therefore, the same effect as explained in the aforementioned example can be obtained.

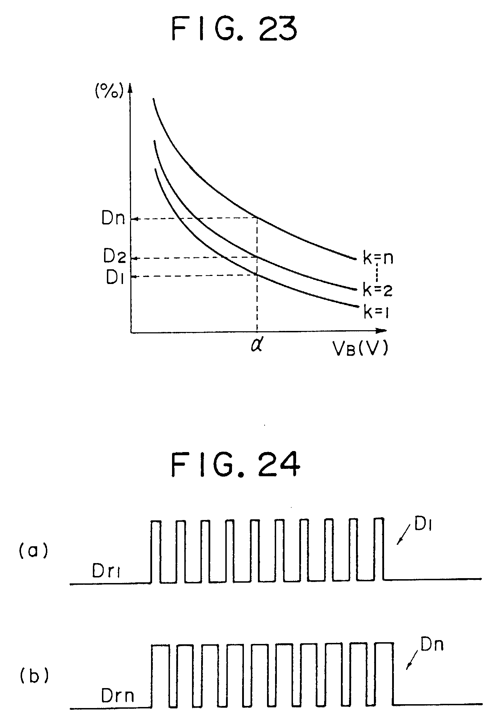

When the aforementioned driving pulse is composed of the pulses having a specific ratio, the duty ratio is computed in step 680. More specifically, the duty ratio of the driving pulse is computed from the value α of the electrical source voltage V_{B} based on the characteristic of the k-th cylinder shown in Fig. 23. For example, in the case of the first cylinder, the duty ratio D₁ is computed from the characteristic of k = 1; in the case of the second cylinder, the duty ratio D₂ of the driving pulse is computed from the characteristic of k = 2; in the case of n-th cylinder, the duty ratio Dₙ of the driving pulse is computed.

Accordingly, in step 660, the driving pulse Dᵣ is, as shown in Fig. 24 (a), corrected to the driving pulse Dᵣ₁ with the duty ratio D₁ in the case when the controlled cylinder is the first cylinder that is the nearest to driving pulse 54, and in the case when the controlled cylinder is the n-th cylinder that is farthest to driving circuit 54, the driving pulse Dᵣ is, as shown in Fig. 24 (b), corrected to the driving pulse Dᵣₙ with the duty ratio Dₙ which is set larger than that of the first cylinder, and increases for every cylinder; thereby the same effect as in the aforementioned example of the preferred embodiment can be obtained.

As explained above, the capacity of the driving pulse charged in every solenoid valve is corrected, corresponding to the voltage drop in each wire harness between the solenoid valve installed on the fuel-injection pump for each cylinder and the driving circuit to drive the solenoid valve; therefore, the driving voltage in each solenoid can be uniform, and the responsiveness of every solenoid valve can be uniform, which makes it possible to maintain a uniform level of injection pressure and injection amount for the fuel-injection pump.

## Claims

1. Fuel-injection device comprising:
a fuel-injection pump (1) at least having a compressor (15) installed inside a cylinder (3) wherein a plunger (4) is slidably inserted, a high-pressure passage (14) guiding fuel from the compressor (15) to a nozzle (10), and a fuel-supplying passage (34) supplying the fuel supplied from a fuel-intake (35) to said compressor (15); and
a solenoid valve (20) installed at some point along the fuel-supplying passage (34), having a valve (23) to adjust the communication conditions between the compressor side and the fuel-intake side on said fuel-supplying passage (34), and controlling the motion of the valve (23) by control signals externally supplied to the solenoid (32) of the solenoid valve (20);
**characterized by** further comprising:
an electrical source voltage detecting means to detect an electrical source voltage used to control said solenoid valve (20); and
a driving pulse adjusting means to form a driving pulse, which contains a pulse having a large duty ratio for a forced time length and a subsequent pulse having a preferably smaller duty ratio for a limited time length, within said solenoid valve's driving time period determined by the sum of the time delay in valve's closing required for said valve (23) to shut off said fuel-supplying passage (34) and of the valve-closed time length required to obtain the desired fuel-injection level, computed from an accelerator pedal position and engine rotation number, and wherein the duty ratio of said forced time length and that of said limited time length are adjusted according to the electrical source voltage detected by said electrical source voltage detecting means.

2. Fuel-injection device according to claim 1, characterized by having a first generator generating the pulse having a large duty ratio at specific time intervals, for a specific time period, and a second generator generating the pulse having a duty ratio smaller than that of the pulse generated from said first generator, wherein the pulse put out from said second generator during said solenoid valve's driving period and the pulse put out from said first generator are input in an OR circuit to preliminarily form a forced time length and a limited time length for said driving pulse, and the duty ratio of the driving pulse in said forced time length and that of said limited time length are adjusted according to the electrical source voltage level detected by said electrical source voltage detecting means.

3. Fuel-injection device according to claim 1, characterized in that the duty ratio of the driving pulse of said forced time length and that of said limited time length are determined by a preliminarily determined map, according to the electrical source voltage level detected by said electrical source voltage detecting means, and the driving pulse is formed by directly using the forced time length and the duty ratio.

4. Fuel-injection device according to claim 1, characterized in that the forced time length of said driving pulse and the duty ratio of said limited time length increase according to the drop in electrical source voltage.

5. Fuel-injection device according to claim 1, characterized in that said valve-closed time length is determined by computing a desired injection level based on the position of an acceleration pedal and engine rotation condition, by converting said computed desired injection level to a cam angle necessary to obtain the injection level, and subsequently, by computing the time necessary for the cam to rotate by the cam angle.

6. Fuel-injection device according to claim 1, characterized in that the solenoid valve (20) extendedly installed on the side of the injection pump (1), and inserted by a slidable rod (22) having said valve (23) has a valve housing (21) with a valve seat (24) for said valve (23) to be seated on, a header (25) mounted on said valve housing (21) to cover said valve (23) and to create a space (27) to accommodate said valve (23) between itself and said valve housing (21), the solenoid (32) facing an armature (31) secured to said rod (22) and positioned at the opposite side to said header (25) of said valve housing (21), and a spring (33) constantly pushing said valve (23) away from said valve seat (24), and wherein said fuel supplying passage (34) is reaching near said valve's accommodating space (27) and said rod (22) that connects to this accommodating space (27) at the time of the valve's opening.

## Patentansprüche

1. Kraftstoff-Einspritzvorrichtung, umfassend:
eine Kraftstoff-Einspritzpumpe (1) mit mindestens einem Kompressor (15), der in einem Zylinder (3) eingebaut ist, in den ein Plungerkolben (4) verschieblich eingesetzt ist, einem Hochdruckdurchlaß (14), der Kraftstoff von dem Kompressor (15) zu einer Düse (10) leitet, und einem Kraftstoffversorgungsdurchlaß (34), der Kraftstoff, der von einem Kraftstoffeinlaß (35) zugeleitet wird, zu dem Kompressor (15) leitet; und
ein Magnetventil (20), das an einem Punkt entlang des Kraftstoffversorgungsdurchlasses (34) eingebaut ist, das ein Ventil (23) zur Einstellung der Verbindungszustände zwischen der Kompressorseite und der Kraftstoff-Einlaßseite an dem Kraftstoffversorgungsdurchlaß (34) aufweist und die Bewegung des Ventils (23) durch Steuersignale steuert, die von außen dem Elektromagneten (32) des Magnetventils (20) zugeleitet werden;
**dadurch gekennzeichnet,** daß sie ferner umfaßt:
ein Stromquellenspannungs-Erfassungsmittel zum Erfassen einer Stromquellenspannung, die zum Steuern des Magnetventils (20) verwendet wird; und
ein Antriebspuls-Einstellmittel zum Formen eines Antriebspulses, der einen Impuls enthält mit einem großen Tastverhältnis für eine erzwungene Zeitdauer und einem anschließenden Impuls mit einem vorzugsweise kleineren Tastverhältnis für eine begrenzte Zeitdauer innerhalb der Ansteuer- bzw. Betätigungszeitdauer des Magnetventils, die bestimmt wird durch die Summe der Zeitverzögerung beim Ventilschließen, die das Ventil (23) zum Absperren des Kraftstoffversorgungsdurchlasses (34) benötigt, und der Ventilschließzeitdauer, die zum Erhalten des gewünschten Kraftstoff-Einspritzwertes erforderlich ist, die aus einer Gaspedalposition und Motordrehzahl berechnet wird, und wobei das Tastverhältnis der erzwungenen Zeitdauer und jenes der begrenzten Zeitdauer in Übereinstimmung mit der Stromquellenspannung eingestellt werden, die von dem Stromquellenspannungs-Erfassungsmittel erfaßt wird.

2. Kraftstoff-Einspritzvorrichtung nach Anspruch 1, dadurch gekennzeichnet, daß sie einen ersten Generator aufweist, der den Impuls mit einem großen Tastverhältnis in bestimmten Zeitintervallen für eine bestimmte Zeitdauer erzeugt, und einen zweiten Generator, der den Impuls mit einem kleineren Tastverhältnis als jenem des Impulses erzeugt, der von dem ersten Generator erzeugt wird, wobei der Impuls, der von dem zweiten Generator während der Ansteuer- bzw. Betätigungszeitdauer des Magnetventils ausgegeben wird, und der Impuls, der von dem ersten Generator ausgegeben wird, in eine ODER-Schaltung eingegeben werden, um vorübergehend eine erzwungene Zeitdauer und eine begrenzte Zeitdauer für den Antriebspuls zu bilden, und das Tastverhältnis des Antriebspulses in der erzwungenen Zeitdauer und jenes der begrenzten Zeitdauer in Übereinstimmung mit dem Stromquellenspannungswert eingestellt werden, der von dem Stromquellenspannungs-Erfassungsmittel erfaßt wird.

3. Kraftstoff-Einspritzvorrichtung nach Anspruch 1, dadurch gekennzeichnet, daß das Tastverhältnis des Antriebspulses in der erzwungenen Zeitdauer und jenes in der begrenzten Zeitdauer durch ein vorläufig bestimmtes Diagramm in Übereinstimmung mit dem Stromquellenspannungswert bestimmt werden, der von dem Stromquellenspannungs-Erfassungsmittel erfaßt wird, und der Antriebspuls unter direkter Verwendung der erzwungenen Zeitdauer und des Tastverhältnisses geformt wird.

4. Kraftstoff-Einspritzvorrichtung nach Anspruch 1, dadurch gekennzeichnet, daß die erzwungene Zeitdauer des Antriebspulses und das Tastverhältnis der begrenzten Zeitdauer in Übereinstimmung mit der Abnahme der Stromquellenspannung zunehmen.

5. Kraftstoff-Einspritzvorrichtung nach Anspruch 1, dadurch gekennzeichnet, daß die Ventilschließzeitdauer durch Berechnen eines gewünschten Einspritzwiertes auf der Basis der Position eines Gaspedals und eines Motordrehzustandes bestimmt wird, indem der berechnete, gewünschte Einspritzwert in einen Nockenwinkel umgewandelt wird, der zum Erreichen des Einspritzwertes erforderlich ist, und anschließend die Zeit berechnet wird, welche die Nocke zum Drehen um den Nokkenwinkel benötigt.

6. Kraftstoff-Einspritzvorrichtung nach Anspruch 1, dadurch gekennzeichnet, daß das Magnetventil (20), das an der Seite der Einspritzpumpe (1) vorspringend angeordnet ist und in das eine verschiebliche Stange (22) mit dem Ventil (23) eingesetzt ist, ein Ventilgehäuse (21) mit einem Ventilsitz (24), auf den das Ventil (23) aufgesetzt wird, ein Kopfstück (25), das an dem Ventilgehäuse (21) zum Abdecken des Ventils (23) und zur Schaffung eines Raums (27) zur Aufnahme des Ventils (23) zwischen sich selbst und dem Ventilgehäuse (21) befestigt ist, den Elektromagneten (32), der einem Anker (31), der an der Stange (22) befestigt ist, gegenüberliegt und an der dem Kopfstück (25) gegenüberliegenden Seite des Ventilgehäuses (21) angeordnet ist, und eine Feder (33) aufweist, die das Ventil (23) ständig von dem Ventilsitz (24) wegschiebt, und wobei der Krafstoffversorgungsdurchlaß (34) in der Nähe des Ventilaufnahmeraums (27) und der Stange (22) reicht, welcher an diesen Aufnahmeraum (27) zum Zeitpunkt der Ventilöffnung angeschlossen ist.

## Revendications

1. Dispositif d'injection de carburant comprenant:
une pompe d'injection de carburant (1) comportant au moins un compresseur (15) monté dans un cylindre (3) dans lequel est inséré en coulissement un piston-plongeur (4), un passage haute pression (14) guidant du carburant depuis le compresseur (15) jusqu'à un injecteur (10), et un passage de distribution de carburant (34) distribuant le carburant audit compresseur (15), alimenté par une entrée de carburant (35); et
une soupape magnétique (20) montée à un certain endroit le long du passage de distribution de carburant (34), possédant une soupape (23) pour régler les conditions de communication entre le côté compresseur et le côté entrée de carburant sur ledit passage de distribution de carburant (34), et réglant le mouvement de la soupape (23) via des signaux de commande envoyés par l'extérieur au solénoïde (32) de la soupape magnétique (20);
caractérisé par le fait qu'il comprend en outre:
un moyen de détection de la tension de source électrique pour détecter une tension de source électrique utilisée pour commander ladite soupape magnétique (20); et
un moyen d'adaptation de l'impulsion d'entraînement pour former une impulsion d'entraînement qui contient une impulsion possédant un rapport d'utilisation élevé pendant un laps de temps forcé et une impulsion ultérieure possédant un rapport d'utilisation de préférence inférieur pendant un laps de temps limité dans ledit laps de temps d'entraînement de la soupape magnétique, déterminé par la somme du temps de retard dans la fermeture de la soupape, requis pour que ladite soupape (23) obture ledit passage de distribution du carburant (34) et du laps de temps correspondant à la fermeture de la soupape, requis pour obtenir le niveau d'injection de carburant désiré, calculée à partir de la position de la pédale d'accélérateur et de la vitesse de rotation du moteur, et dans lequel le rapport d'utilisation dudit laps de temps forcé et celui dudit laps de temps limité sont adaptés en fonction de la tension de source électrique détectée par ledit moyen de détection de la tension de source électrique.

2. Dispositif d'injection de carburant selon la revendication 1, caractérisé par le fait qu'il possède un premier générateur générant les impulsions possédant un rapport d'utilisation élevé à des intervalles de temps spécifiques, pendant un laps de temps spécifique, et un second générateur générant les impulsions possédant un rapport d'utilisation inférieur à celui des impulsions générées par ledit premier générateur, dans lequel les impulsions générées par ledit second générateur au cours de ladite période d'entraînement de la soupape magnétique et les impulsions générées par ledit premier générateur sont entrées dans un circuit OR pour former de manière préliminaire un laps de temps forcé et un laps de temps limité pour lesdites impulsions d'entraînement, et le rapport d'utilisation des impulsions d'entraînement au cours dudit laps de temps forcé et celui des impulsions d'entraînement au cours dudit laps de temps limité sont adaptés en fonction du niveau de tension de source électrique détecté par ledit moyen de détection de tension de source électrique.

3. Dispositif d'injection de carburant selon la revendication 1, caractérisé en ce que le rapport d'utilisation de l'impulsion d'entraînement au cours dudit laps de temps forcé et celui de celle au cours dudit laps de temps limité sont déterminés par une carte déterminée de manière préliminaire, conformément au niveau de tension de source électrique détecté par ledit moyen de détection de tension de source électrique, et l'impulsion d'entraînement est formée en utilisant directement le laps de temps forcé et le rapport d'utilisation.

4. Dispositif d'injection de carburant selon la revendication 1, caractérisé en ce que le laps de temps forcé de ladite impulsion d'entraînement et le rapport d'utilisation dudit laps de temps limité augmentent en fonction de la chute de la tension de source électrique.

5. Dispositif d'injection de carburant selon la revendication 1, caractérisé en ce que ledit laps de temps correspondant à la fermeture de la soupape est déterminé en calculant un niveau d'injection désiré basé sur la position de la pédale d'accélérateur et sur la vitesse de rotation du moteur, en transformant ledit niveau d'injection désiré calculé en un angle de came nécessaire pour obtenir le niveau d'injection et en calculant ensuite le temps nécessaire pour la rotation de la came en formant l'angle de came.

6. Dispositif d'injection de carburant selon la revendication 1, caractérisé en ce que la soupape magnétique (20) montée en prolongement sur le côté de la pompe d'injection (1) et insérée par une tige coulissante (22) comportant ladite soupape (23) possède un logement de soupape (21) comprenant un siège de soupape (24) sur lequel vient s'appuyer ladite soupape (23), un collecteur (25) monté sur ledit logement de soupape (21) pour recouvrir ladite soupape (23) et pour créer un espace (27) pour que vienne s'y loger ladite soupape (23), entre elle-même et ledit logement de soupape (21), le solénoïde (32) faisant face à un induit (31) fixé à ladite tige (22) et positionné sur le côté opposé audit collecteur (25) dudit logement de soupape (21), un ressort (33) poussant constamment ladite soupape (23) à l'écart dudit siège de soupape (24), et dans lequel ledit passage de distribution de carburant (34) s'étend jusqu'à proximité dudit espace (27) dans lequel vient se loger la soupape et de ladite tige (22) qui est reliée à cet espace de logement (27) au moment de l'ouverture de la soupape.
